# EUROPEAN PATENT SPECIFICATION

(11) **EP 3 267 541 B1**
(45) Date of publication and mention of the grant of the patent: **15.06.2022**
(21) Application number: 17180344.8
(22) Date of filing: 07.07.2017
(51) Int. Cl.: H02G 3/12, H02G 3/14

(54) **APPARATUS-MULTIPLIER DEVICE**
EINRICHTUNGSVERVIELFACHERVORRICHTUNG
DISPOSITIF MULTIPLICATEUR D'APPAREIL

(30) Priority: 08.07.2016 IT 201600071315 U
(43) Date of publication of application: 10.01.2018
(73) Proprietor: Rosi Materiale Elettrico S.r.l., 43126 Parma (IT)
(72) Inventor: ROSI, Renato, 29010 ALSENO (PC) (IT)
(74) Representative: Biallo, Dario

(56) References cited:
- EP-A1- 2 819 257
- WO-A1-2017/059546
- GB-A- 2 325 353
- US-A- 2 385 620
- US-A1- 2013 277 086
- US-A1- 2015 340 826
- US-A1- 2016 013 626

## Description

The present invention relates to an apparatus-multiplier device particularly, but not exclusively, useful in the field of electrical systems in civil engineering.

For the purposes of the present description, the sockets, the switches and other control devices of an electrical system are generically indicated as apparatuses of the system.

As is well known, nowadays, such apparatuses are embedded in walls at the boxes of the flush type. These boxes of the flush type are embedded in the walls opened towards the exterior, in such a way as to define a space for housing the apparatuses. The boxes of the flush type are, then, closed by means of a closing plate, commonly called apparatus-bearing plate, which can be removably attached to the body of the box by screws or other fastening means. The apparatuses are engaged by snap-fitting in receiving seats obtained on the closing plate, and they are housed in the compartment defined by the box. The apparatuses are connected to the electrical cables of the power supply line of the electrical system, which are inserted into the box of the flush type through pre-fractured walls of the body of the box. Lastly, the installation is generally completed with a finishing plate, which can be fastened on the covering plate by fastening means, e.g. screws, or by clip latching means.

As is well known, boxes of the flush type can be of various sizes, depending on the number of apparatuses they have to contain. In particular, each box of the flush type is intended for the installation of a predetermined number of apparatuses. Therefore, if one desires a higher number of apparatuses to be available at a box of the flush type than the number provided by that box, it is necessary to use so-called apparatus-multiplier devices, e.g. multiple-socket power strips. As is well known, multiple-socket power strips comprise a main body bearing a plurality of electrical sockets, that can be connected to a wall-mounted electrical socket by means of a flexible cable that terminates with an electrical plug. Multiple-socket power strips thus permit to multiply wall-mounted electrical sockets, but they are bulky, they cause disorder and they do not achieve a secure connection to the electrical power supply system, because there is always a risk of accidental disconnection of the plug that connects the main body to the multiplied electrical socket.

Document EP2819257 describes an electrical device comprising a frame that defines an opening and that can be fastened on an electrical box in a bearing plane, at least two accessory mechanisms that are situated side by side and including a first accessory mechanism that extends through the opening of thee frame and lies mainly behind said bearin plane and at leat a second accessory mechanism that extends exclusively in front of said bearing plane.

Document GB2325353 describes an electrical accessory, eg a complete adaptor socket/outlet assembly which has integral connections providing power from the lower sockets to the upper sockets so that existing single and double socket-outlets can be replaced with 2 and 4 socket-outlets respectively, while retaining and connecting to the existing backbox and mains wiring. US2015340825 describes a multiple functions wall cover plate that has built-in USB sockets. US2385620 describes an electrical outlet accessory fixture that comprises a light socket.

Document US2013/277086 describes an electric wiring system having a frame assembly that includes a frame opening at a central portion thereof. The frame opening provides access to the interior of the device wall box. At least one electrical wiring device is configured to snap into the frame opening such that the interior of the device wall box is completely enclosed by the frame assembly and the at least one electrical wiring device such that access to wiring disposed within the device wall box is substantially prevented.

The object of the present invention is to overcome the aforementioned drawbacks, and in particular to provide an apparatus-multiplier device that is able to achieve a stable and secure connection with the electrical power supply system, ensuring an orderly configuration with reduced bulk compared to known multiple-socket power strips, and that is, at the same time, simple to install.

This and other objects according to the present invention are achieved by providing an apparatus-multiplier device as set forth in claim 1.

Additional features of the apparatus-multiplier device are described in the dependent claims.

The features and advantages of an apparatus-multiplier device according to the present invention will be more evident from the following exemplifying and nonlimiting description, referred to the accompanying schematic drawings, wherein:

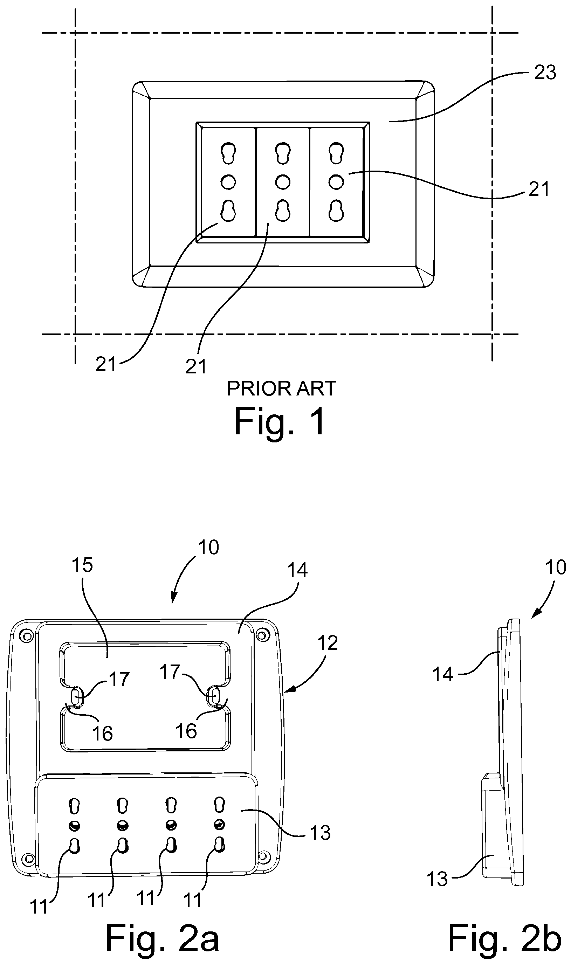

- figure 1 is a front view of three electrical sockets embedded in a wall according to a known configuration, which also provides for the use of a finishing plate;
- figures 2a and 2b are two schematic front and side views, respectively, of a first embodiment of an apparatus-multiplier device according to the present invention;
- figure 3a is a front schematic perspective view of the apparatus-multiplier device of figures 2a and 2b with an exposed terminal block;
- figure 3b is a first rear schematic perspective view of the apparatus-multiplier device of figure 3a;
- figure 3c is a second rear schematic perspective view of the apparatus-multiplier device of figure 3a;
- figure 3d is a third rear schematic perspective view of the apparatus-multiplier device of figure 3a with a rear closing element;

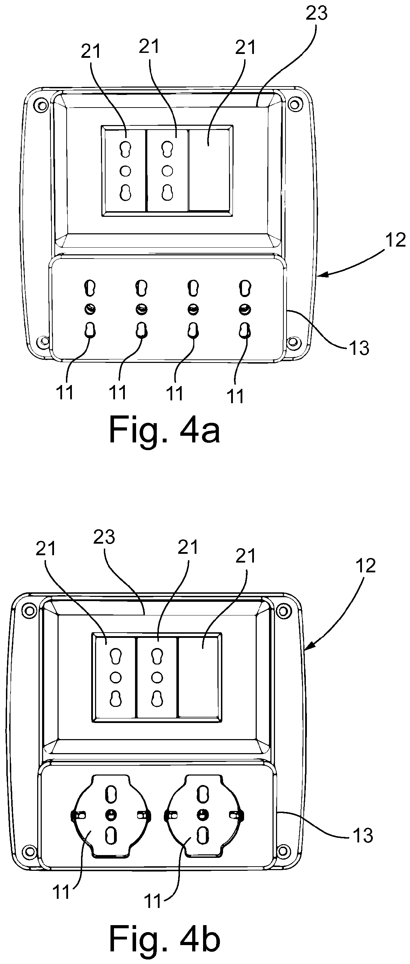

- figure 4a is a front schematic view of the apparatus-multiplier device of figure 2a in a mounting configuration;
- figure 4b is a front schematic view of a second embodiment of an apparatus-multiplier device according to the present invention in a mounting configuration;

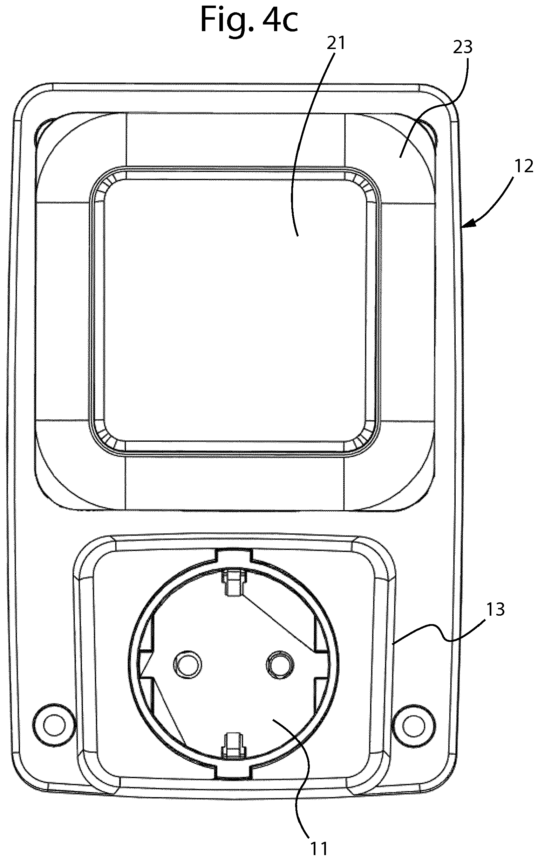

- figure 4c is a front schematic view of a third embodiment of an apparatus-multiplier device according to the present invention in a mounting configuration;

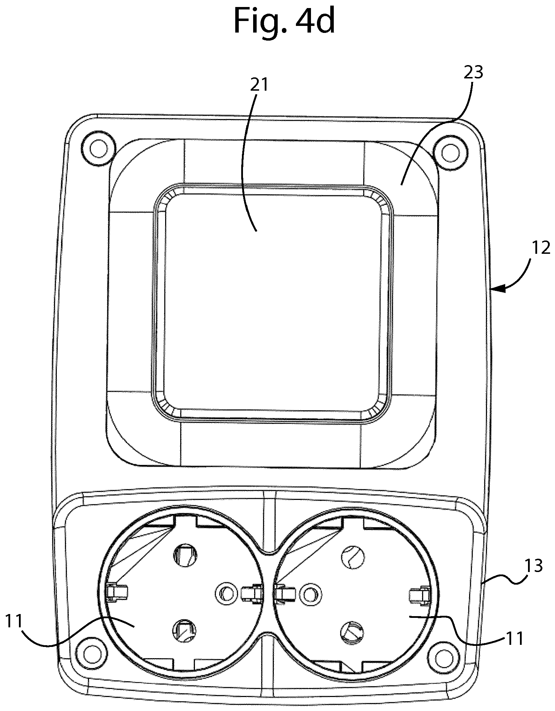

- figure 4d is a front schematic view of a fourth embodiment of an apparatus-multiplier device according to the present invention in a mounting configuration;

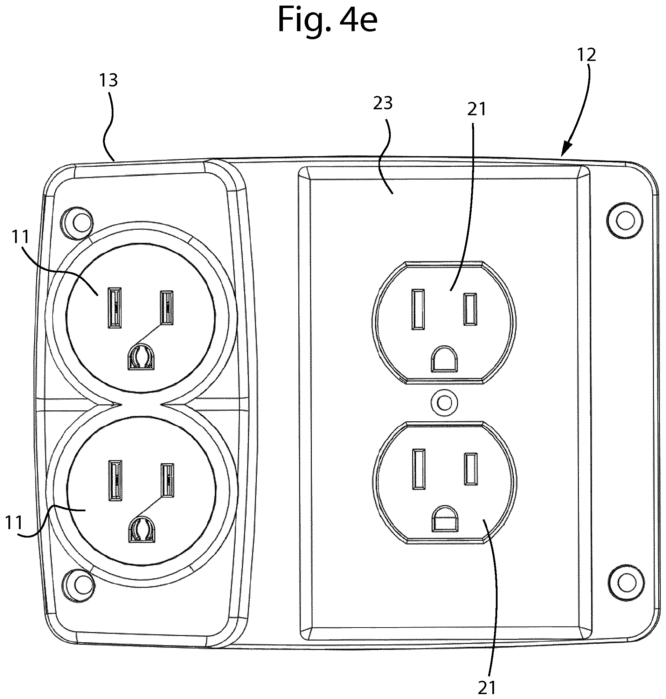

- figure 4e is a front schematic view of a fifth embodiment of an apparatus-multiplier device according to the present invention in a mounting configuration;

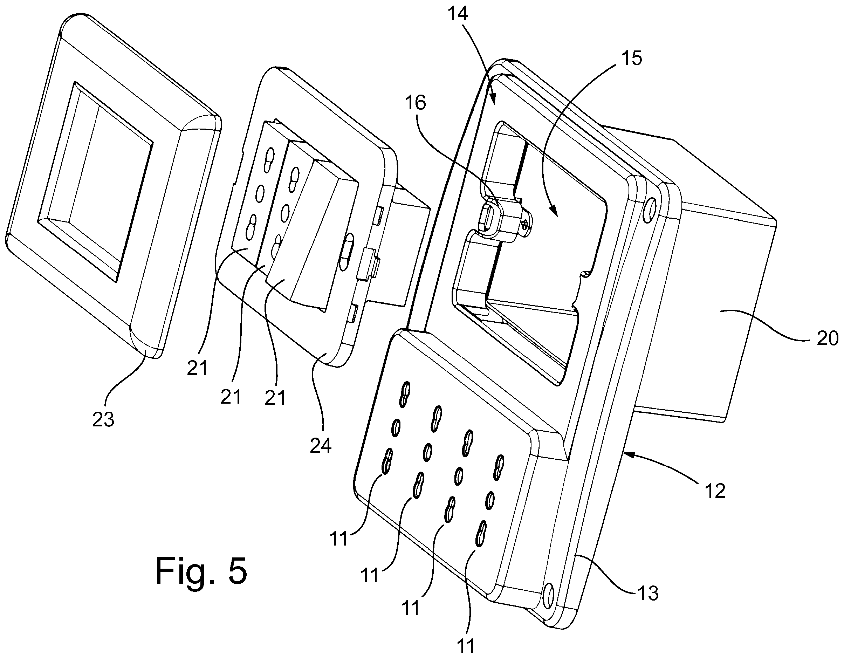

- figure 5 is a partially exploded schematic perspective view of the assembly of figure 4a.

With reference to the figures, an apparatus-multiplier device is shown, indicated in its entirety by the number 10.

Said apparatus-multiplier device 10 can be, in particular, associated with a box of the flush type 20 for walls, provided with a closing plate 24 that can be coupled with a plurality of primary apparatuses 21. The box of the flush type 20 can also be provided with a finishing plate 23 that can be coupled with the closing plate.

In the present description, the term "primary apparatuses" is meant to indicate the apparatuses which are to be installed or have already been installed in the closing plate 24 of a box of the flush type 20, i.e. the apparatuses already provided in the boxes of the flush type of the electrical system.

The apparatus-multiplier device 10 thus comprises a plurality of secondary apparatuses 11 electrically connectable in parallel to at least one of the primary apparatuses 21.

It has to be noted that any combination of apparatuses may be provided, i.e. sockets and switches of various types, both among the primary apparatuses and among the secondary apparatuses.

According to the present invention, the apparatus-multiplier device 10 further comprises a support frame 12 that can be fastened to a wall, which comprises at least one housing portion 13 to house and support the secondary apparatuses 11 and a coupling portion 14 adapted to be coupled with the closing plate 24 of a box of the flush type in such a way as to leave the primary apparatuses 21 accessible by a user. In detail, the support frame 12 can be fastened to a wall by screws or other fastening means.

The coupling portion 14 is then coupled with the closing plate 24, enabling in any case a user to have available the primary apparatuses 21 mounted in respective receiving seats obtained in the closing plate 24 itself. For example, if such primary apparatuses 21 are sockets, the user can reach them to insert respective electrical plugs into the sockets; if at least one of the primary apparatuses 21 is a manual switch, the user can manually operate that switch.

The maximum number of primary apparatuses 21 is set by the dimensions and by the type of the box of the flush type; differently, the maximum number of secondary apparatuses 11 depends on the dimensions of the at least one housing portion 13 of the multiplier device 10.

Preferably, the coupling portion 12 comprises a through opening 15 adapted to make a receiving seat for the closing plate 24.

As in the embodiment shown in the accompanying figures, the support frame 12 can be shaped as a plate element having a window or through opening 15 with complementary shape and dimensions to those of the closing plate 24.

Preferably, the coupling portion 14 comprises two opposite protrusions 16 which project towards the interior of the through opening 15; such opposite protrusions 16 advantageously have through seats 17 adapted to be crossed by fastening elements to fasten the closing plate 24 to the box of the flush type 20.

These through seats 17 can, for example, be threaded. Preferably, the at least one housing portion 13 is positioned perimetrically along one side of the through opening 15. More in general, the support frame 12 can comprise a plurality of housing portions 13 arranged around the coupling portion 14 in any position. Preferably, the secondary apparatuses 11 are electrically connected by means of electrical cables to a terminal block 18 adapted to achieve the connection in parallel to at least one of the primary apparatuses 21.

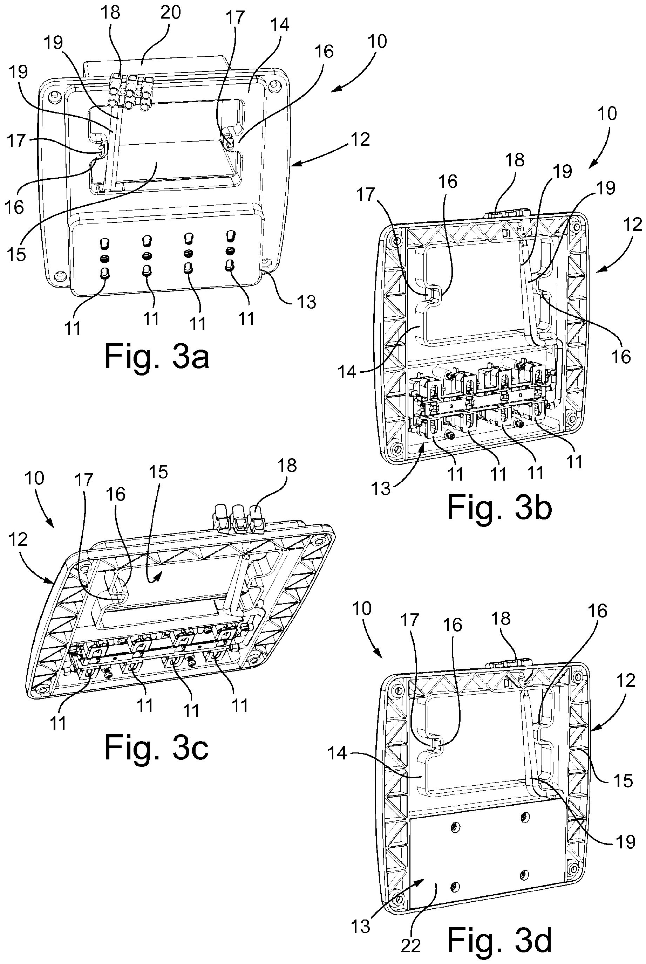

In the particular embodiment shown in the enclosed figures, the housing portion 13 supports a series of secondary apparatuses 11, such as for example the electrical sockets shown, located in succession one after the other. In this way, the wiring of such secondary apparatuses 11 is simplified, since all the electrical cables employed for the connection of each secondary apparatus can be grouped in shared cables or protection tubes 19, as shown for example in figures 3b and 3c.

Preferably, the housing portion 13 can be closed posteriorly by a rear closing element 22, that can be coupled with the support frame 12 by, for example, fastening means.

The installation of the apparatus-multiplier device 10 according to the present invention takes place as follows with particular reference to a generic box of the flush type 20.

Once such box of the flush type 20 is opened, removing any finishing plate 23 and the closing plate 24 the electrical connections are effected in parallel between the secondary apparatuses 11 and at least one of the primary apparatuses 21. These electrical connections can advantageously be effected by means of the terminal block 18 with which the apparatus-multiplier device 10 is provided.

If the apparatus-multiplier device 10 is not provided with such terminal block 18, the connections are effected in a way that is *per se* known, connecting the electric cables relating to each secondary apparatus 11 to the terminals that are on the back of the primary apparatuses 21.

Once the electric connections are readied, the support frame 12 is fastened to the wall in such a way that the coupling portion 14, and more in particular the through opening 15, is placed at the opening of the box of the flush type.

At this point, the closing plate 24 of the box of the flush type 20 is applied on the coupling portion 14, more in particular in such a way as to engage it in the receiving seat defined by the through opening 15.

The installation can end with the application of the finishing plate 23, when required, on the closing plate 24.

From the above description, the features of the apparatus-multiplier device subject of the present invention are clear, as well as the relative advantages are clear.

In fact, such device allows to increase the number of apparatuses available at a box of the flush type without causing disorder, whilst assuring the connection of the secondary apparatuses to the power supply line of the electrical system, because such connection is not exposed to external agents, such as water, and to potential intentional or fortuitous tampering.

The apparatus-multiplier device is also small in size, being able to be fastened to a wall and to protrude only by the bulk of the supported secondary apparatuses.

## Claims

1. Apparatus-multiplier device (10) that can be associated with a box of the flush type (20) for walls, wherein said box has a closing plate (24) that is coupled with a plurality of primary apparatuses (21), wherein said plurality of primary apparatuses (21) are mounted in respective receiving seats obtained in the closing plate (24), said apparatus-multiplier device (10) comprising:
- a plurality of secondary apparatuses (11) electrically connectable in parallel to at least one of said primary apparatuses (21);
- a support frame (12) that can be attached to a wall, which comprises at least one housing portion (13) to house and support said secondary apparatuses (11) and a coupling portion (14) adapted to be coupled with said closing plate (24) in such a way as to leave said primary apparatuses (21) accessible by a user, wherein said coupling portion (14) comprises a through opening (15) adapted to make a receiving seat for said closing plate (24).

2. Apparatus-multiplier device (10) according to claim 1, wherein said at least one housing portion (13) is positioned perimetrically along a side of said through opening (15).

3. Apparatus-multiplier device (10) according to one of the previous claims, wherein said coupling portion (14) comprises two opposite protrusions (16) which project towards the interior of said through opening, said opposite protrusions (16) having through seats (17) able to be traversed by fastening elements to fasten said closing plate (24) to said box of the flush type (20) .

4. Apparatus-multiplier device (10) according to one of the previous claims, wherein said secondary apparatuses (11) are electrically connected by means of electrical cables to a terminal block (18) adapted to achieve said connection in parallel to at least one of said primary apparatuses (11).

5. Apparatus-multiplier device (10) according to one of the previous claims, wherein said at least one housing portion (13) houses and supports a series of secondary apparatuses (11) located in succession one after the other.

6. Apparatus-multiplier device (10) according to one of the previous claims, wherein said support frame (12) comprises a plurality of said housing portions (13) (13) arranged around said coupling portion (14) in any position.

## Patentansprüche

1. Einrichtungsvervielfachervorrichtung (10), die mit einer Dose des bündigen Typs (20) für Wände verbunden werden kann, wobei die Dose eine Verschlussplatte (24) aufweist, die mit einer Vielzahl von primären Einrichtungen (21) gekoppelt ist, wobei die Vielzahl von primären Einrichtungen (21) in entsprechenden Aufnahmesitzen montiert sind, die in der Verschlussplatte (24) erhalten sind, wobei die Einrichtungsvervielfachervorrichtung (10) umfasst:
- eine Vielzahl von sekundären Einrichtungen (11), die zu mindestens einer der primären Einrichtungen (21) elektrisch parallel geschaltet werden können;
- einen Tragrahmen (12), der an einer Wand befestigt werden kann und mindestens einen Gehäuseabschnitt (13) zur Aufnahme und zum Tragen der sekundären Einrichtungen (11) und einen Kupplungsabschnitt (14) umfasst, der geeignet ist, mit der Verschlussplatte (24) so gekoppelt zu werden, dass die primären Einrichtungen (21) für einen Benutzer zugänglich bleiben, wobei der Kupplungsabschnitt (14) eine Durchgangsöffnung (15) umfasst, die geeignet ist, einen Aufnahmesitz für die Verschlussplatte (24) zu bilden.

2. Einrichtungsvervielfachervorrichtung (10) nach Anspruch 1, wobei der mindestens eine Gehäuseabschnitt (13) am Umfang entlang einer Seite der Durchgangsöffnung (15) angeordnet ist.

3. Einrichtungsvervielfachervorrichtung (10) nach einem der vorstehenden Ansprüche, wobei der Kupplungsabschnitt (14) zwei gegenüberliegende Vorsprünge (16) umfasst, die in das Innere der Durchgangsöffnung ragen, wobei die gegenüberliegenden Vorsprünge (16) durchgehende Sitze (17) aufweisen, die von Befestigungselementen durchquert werden können, um die Verschlussplatte (24) an der Dose des bündigen Typs (20) zu befestigen.

4. Einrichtungsvervielfachervorrichtung (10) nach einem der vorstehenden Ansprüche, wobei die sekundären Einrichtungen (11) mittels elektrischer Kabel mit einem Anschlussblock (18) elektrisch verbunden sind, der geeignet ist, die Parallelschaltung zu mindestens einer der primären Einrichtungen (11) herzustellen.

5. Einrichtungsvervielfachervorrichtung (10) nach einem der vorstehenden Ansprüche, wobei der mindestens eine Gehäuseabschnitt (13) eine Reihe von nacheinander angeordneten sekundären Einrichtungen (11) aufnimmt und trägt.

6. Einrichtungsvervielfachervorrichtung (10) nach einem der vorstehenden Ansprüche, wobei der Tragrahmen (12) eine Vielzahl der Gehäuseabschnitten (13) (13) umfasst, die um den Kopplungsabschnitt (14) in jeder Position angeordnet sind.

## Revendications

1. Dispositif multiplicateur d'appareil (10) qui peut être associé à une boîte du type encastré (20) pour murs, où ladite boîte à une plaque de fermeture (24) qui est couplée à une pluralité d'appareils primaires (21), où ladite pluralité d'appareils primaires (21) est montée dans des sièges de réception respectifs obtenus dans la plaque de fermeture (24), ledit dispositif multiplicateur d'appareil (10) comprenant:
- une pluralité d'appareils secondaires (11) pouvant être connectés électriquement en parallèle à au moins un desdits appareils primaires (21);
- un cadre de support (12) qui peut être fixé à un mur, qui comprend au moins une partie de logement (13) pour loger et supporter lesdits appareils secondaires (11) et une partie de couplage (14) adaptée pour être couplée à ladite plaque de fermeture (24) de manière à laisser lesdits appareils primaires (21) accessibles par un utilisateur, où ladite partie de couplage (14) comprend une ouverture traversante (15) adaptée pour réaliser un siège de réception pour ladite plaque de fermeture (24).

2. Dispositif multiplicateur d'appareil (10) selon la revendication 1, où ladite au moins une partie de logement (13) est positionnée de manière périmétrique le long d'un côté de ladite ouverture traversante (15).

3. Dispositif multiplicateur d'appareil (10) selon l'une des revendications précédentes, où ladite partie de couplage (14) comprend deux saillies opposées (16) qui font saillie vers l'intérieur de ladite ouverture traversante, lesdites saillies opposées (16) ayant des sièges traversants (17) pouvant être traversés par des éléments de fixation pour fixer ladite plaque de fermeture (24) à ladite boîte du type encastré (20).

4. Dispositif multiplicateur d'appareil (10) selon l'une des revendications précédentes, où lesdits appareils secondaires (11) sont connectés électriquement au moyen de câbles électriques à un bornier (18) adapté pour réaliser ladite connexion en parallèle à au moins un desdits appareils primaires (11).

5. Dispositif multiplicateur d'appareil (10) selon l'une des revendications précédentes, où ladite au moins une partie de logement (13) loge et supporte une série d'appareils secondaires (11) situés en succession l'un après l'autre.

6. Dispositif multiplicateur d'appareil (10) selon l'une des revendications précédentes, où ledit cadre de support (12) comprend une pluralité desdites parties de logement (13) (13) disposées autour de ladite partie de couplage (14) dans une position quelconque.
